# NEW EUROPEAN PATENT SPECIFICATION

(11) **EP 0 252 669 B2**
(45) Date of publication and mention of the opposition decision: **28.11.2001**
(45) Mention of the grant of the patent: 06.04.1994
(21) Application number: 87305788.9
(22) Date of filing: 30.06.1987
(51) Int. Cl.: C09D 127/12, C08L 27/12, B05D 7/16

(54) **Polymer-metal bonded composite and method of producing same**
Polymer-Metallverbundstoff und Verfahren zu seiner Herstellung
Matériau composite polymère-métal et procédé de sa préparation

(30) Priority: 01.07.1986 US 881371
(43) Date of publication of application: 13.01.1988
(73) Proprietor: EDLON PRODUCTS, INC., Avondale, PA 19311 (US)
(72) Inventor: Butler,Royce A, Newark Delaware 19711 (US); Mackinlay, Allan F, Brookhaven, PA 19015 (US); Morris,Harris L, Media PA 19063 (US); Weinert,Raymond J Jr, Garfield Heights Ohio 44125 (US); Roberts,Robert, Wilmington Delaware 19809 (US); Rau,Steven E, Newark Delaware 19711 (US); Pochopien,Kevin P, Newark Delaware 19711 (US); Paul,Charles W, Newcastle Delaware 19720 (US)
(74) Representative: Marlow, Nicholas Simon

(56) References cited:
- DE-A- 2 028 670
- DE-A- 3 221 946
- FR-A- 2 319 696
- GB-A- 2 051 091
- JP-A- 54 003 172
- JP-A- 60 058 456
- JP-A- 60 080 883
- US-A- 3 989 873
- US-A- 4 605 695

## Description

### FIELD OF THE INVENTION

This invention relates generally to the field of fluorinated polymer coatings and particularly to bonding fluorinated polymers to metals, including ferrous-based metals.

In the chemical processing industry, as well as many other industries, a variety of composite materials are used to fabricate apparatus used therein. In many instances, metals are used to provide the structural strength for such apparatus. However, such apparatus, many times, is required to be exposed to highly corrosive materials which are being processed; some of this exposure is at elevated temperatures and/or elevated pressures which tend to exaggerate the corrosive properties of the materials being processed. It has been found necessary, in many applications, to protect the metals used in such apparatus from the effects of corrosion, under varying conditions of temperature and pressure, particularly at elevated temperatures, and at increased pressures.

The approach, generally, to this problem has been to shield the structural metals from corrosive materials. This is done by forming a composite by superimposing other materials onto those surfaces of the structural metals which would otherwise be exposed to corrosive attack. Such overlayed or barrier materials are selected to have relatively little, or ideally no, reaction to those materials which otherwise corrosively attack the substrate structural metals.

One way of protecting structural metals from corrosive attack is to apply the surface thereof to a barrier material comprising a polymer. This concept has had some success where the corrosive effects of the corrosive materials are relatively mild and where the elevated temperatures to be experienced are modest, being below the heat degradation points of the polymers used. Also, this concept has been used where anti-sticking properties are important, such as in roll coverings used in dryer rollers, carrier rollers, etc.

In an attempt to overcome some of the limitations of most polymers, in respect to corrosive resistance and to limitations on range of elevated temperature use, fluorinated polymers have been used as overlays, or barrier coats, on base structural materials. As is well known, fluorinated polymers exhibit relatively high corrosion-resistance in comparison to other polymers. Also, fluorinated polymers have a relatively high operating temperature point of degradation, in comparison to other polymers. Finally, fluorinated polymers, as well as other polymers are relatively much more flexible in comparison to glass, and are essentially inert to most common chemicals up to the melting point of such fluorinated polymers. Because of such properties, fluoropolymers have been used commercially as chemical barrier coatings.

On the other hand, fluoropolymers characteristically are very long chain, high molecular weight, high melt viscosity polymers with a narrow temperature range, relative to most other polymers, between melt and degradation. Fluoropolymers are also very poor conductors of heat, complicating the approach to developing heat input to induce melting, thus producing void free barrier coatings. The combination of these factors makes processing of fluoropolymers difficult, if not impractical, under many circumstances. Therefore, although fluoropolymers may be primary candidate materials for chemical barrier coatings, they are difficult to process and apply, which in many circumstances substantially diminishes this candidacy.

The present invention relates to the provision of improved barrier coatings comprising fluoropolymers.

### Reported Developments

The following publications disclose coatings comprising fluorocarbon polymers: U.S. Patent Nos. 4,064,963 and 4,605,695; U.K. Patent No. 2 051 091; and EPO Publication No. 10 152.

It is known in the art that the chemical permeability of barrier coatings, including those described in the aforementioned publications, varies inversely with the thickness of that barrier coating. However, it is quite difficult to form relatively thick coatings of fluoropolymers because of their inherent high viscosities which result in low melt flow and slow fusion characteristics. To bond the particles of fluoropolymer resin to each other and to underlying substrate materials, the particles must be brought to above melt temperature but kept below the practical degradation temperature. Inability to control this process may result in entrapment of air between particles, ultimately resulting in the formation of bubbles in the barrier coating. It is very difficult to control this process when such coatings are applied to relatively large or complex metal shapes, as it is difficult to control the temperature of each discrete point of such pieces within a narrow range such that each discrete point is above the melt point of the fluorinated polymer being applied but not above the practical degradation point. Also, it must be ensured that the surrounding atmosphere, adjacent to the exposed face of the barrier coat being applied is, likewise, within the narrow practical range of temperature. And finally, all particles of the fluorinated polymer across the thickness of the coating must, likewise, be within that narrow practical temperature range, notwithstanding the fact that fluorinated polymers are notorious for poor heat transfer.

Attempts have been made to build up series of thin coats of fluorinated polymers, as barrier coatings, overlaying one on another, and using a heating cycle in between each thin layer to bond it to the previous layer. In commercial applications, as are well known, the powdered polymer resin particles are suspended in a carrier fluid, usually water, and sprayed in a thin layer, onto the substrate metal, followed by a heating step. This is followed by a repeat of the cycle, many times, each time laying down a 0.001" to 0.010" thick layer. This method has encountered difficulties as small quantities of the carrier fluid tend to remain trapped within the lattice formed by the powdered resin particles. On heating, the carrier fluid vaporizes and expands, which can separate the layers from one another and may prevent bonding. This can appear as surface bubbles. However, even when each sprayed layer is carefully dried, acceptable bonding may not occur between the thin layers of the barrier coating; the reason for this is not clear.

Also, there are major problems in developing and maintaining a uniform suspension of fluorinated polymer resin particles in the carrier fluids. A variety of additives in the form of surfactants, antifoaming agents and other "wetting aids" and "processing aids" are used in an attempt to overcome these problems. It is believed that these additives hinder the bonding of successively built up thin layers of the polymers to each other, even in situations where no bubbling occurs between such layers.

More recently, attempts have been made to apply dry powdered fluorinated polymer resins to metal substrates using electrostatic deposition, floccing and fluidized bed techniques. Although coatings in excess of 0.3mm (0.012") thickness have been accomplished, attempts to form coatings up to 1mm (0.040") thickness have failed due to the formation of bubbles and voids during the heating stage, regardless of whether a single thick layer is applied or multiple thin layers, interspersed with heating steps, are attempted. The cause of such failures is not clear.

The major problem in using fluorinated polymers as an overlay, or barrier coat, in composites with substrate metals, is that it is difficult to produce high integrity bonding of the fluorinated polymers to the base structural metals. One composite of fluorinated polymer, overlayed as a barrier coating onto steels, has been successfully marketed, under the trade name Fluoroshield, by W.L. Gore and Associates, Inc. This composite is believed to be detailed in aforementioned British Patent No. 2,051,091. Fluoroshield coated metals, however, do not appear to exhibit the long-term bonding integrity or chemical resistance which is deemed necessary, by those with skill in the field, to ensure the extended higher temperature corrosion-resistance necessary for reliable use in chemical processing equipment.

U.S. 3,989,873 discloses fluorocarbon resin coatings having oxide additives.

### SUMMARY OF THE INVENTION

In accordance with one aspect of the present invention, there is provided a method for forming on an article a coating which comprises a primer coating and a top coating and which has a thickness of at least about 1 mm (40 mils) comprising:
(a) forming a primer coating having a thickness of about 0.03 mm (1 mil) to about 0.65 mm (25 mils) by applying to the substrate one or more primer layers of coating composition comprising a homogeneous mixture of a major amount of at least one fluorocarbon resin (A) and a minor amount of property-improving additive (B) or (C);
   the resin (A) being: perfluoroalkoxy tetrafluoroethylene copolymer resin (PFA); ethylenechlorotrifluoroethylene copolymer resin (E-CTFE); ethylenetetrafluoroethylene copolymer resin (E-TFE); poly-(vinylidine fluoride resin) (PVDF); tetrafluoroethylenehexafluoropropylene copolymer resin (FEP); poly(chlorotrifluoroethylene) resin (CTFE); or a mixture of two or more of these resins;
   the additive being:
      (B) 2 to 20% by weight of an additive poly(phenylene sulfide) (PPS) having a particle size of from 1 micron to 200 microns; or
      (C) 1 to 25% by weight of an inorganic nitride or diboride, or a carbide of silicon, zirconium, tungsten or boron having a particle size of from 1 to 40 microns; and
(b) forming a top coating by applying to the primer coating one or more top coat layers of coating composition comprising a homogeneous mixture of a major amount of at least one fluorocarbon resin (A) above and a minor amount of property-improving additive (C) above.

Also according to the invention there is provided a coating composition comprising a homogeneous mixture of a major amount of at least one fluorocarbon resin (A) and a minor amount of a property-improving additive (C);
the resin (A) being: perfluoroalkoxy tetrafluoroethylene copolymer resin (PFA); ethylenechlorotrifluoroethylene copolymer resin (E-CTFE); ethylenetetrafluoroethylene copolymer resin (E-TFE); poly-(vinylidine fluoride resin) (PVDF); tetrafluoroethylenehexafluoropropylene copolymer resin (FEP); poly(chlorotrifluoroethylene) resin (CTFE); or a mixture of two or more of these resins; and
the additive (C) being 1 to 25% by weight of an inorganic nitride or diboride, or a carbide of silicon, zirconium, tungsten or boron having a particle size of from 1 to 40 microns;
the said composition being effective for use in the formation of an adherent, cohesive, non-porous, and corrosion-resistant coating having a thickness of at least 1 mm (40 mils).

Also according to the invention there is provided an article having thereon an adherent, cohesive, non-porous and corrosion-resistant coating formed from the fused composition according to the invention.

Also according to the invention there is provided a method of forming a fused, non-porous and corrosion resistant coating from the composition of the invention
comprising heating the composition for a predetermined time to temperature at least 14 degrees C (25 degrees F) below the temperature at which the resin of the composition in neat form can be fused completely by heating for no longer than the said predetermined period of time without substantially degrading the resin.

The resin and additive used in the invention are capable of flowing and fusing to form an adherent cohesive and non-porous material at ambient pressure and at a temperature of at least 14 deg C (25 deg F) below the temperature at which the resin alone in neat form can be fused completely by heating under substantially the same conditions without substantially degrading the resin.

The invention includes within its scope the use of a mixture of additives, for example, a mixture of two or more of the additives of (B) and (C) above, and, within the group of additives of (C) above, a mixture of two or more of such additives.

Speaking generally, the property improving additive can be selected to improve various properties of coatings formed from the composition of the present invention, for example, properties such as corrosion-resistance, abrasion-resistance, and/or bonding characteristics.

The preferred property-improving additive is a metal carbide, most preferably silicon carbide or zirconium carbide or a mixture of such carbides.

It is expected that the invention will be used most widely in connection with forming coatings on metallic surfaces, particularly iron substrates. However, non-metallic surfaces can be coated also with a composition of the present invention.

The present invention encompasses also a method for forming a coating from the composition of the present invention, including process means for the application of such a composition to an underlying substrate.

### DETAILED DESCRIPTION OF THE INVENTION

The present invention includes a composite of a polymer barrier coating which is highly integrally bonded to a substrate metal surface, the coating exhibiting substantially fewer voids and improved resistance to corrosion and abrasion. Thus, given a certain thickness of the barrier coating of the present invention, in comparison with an equal thickness of barrier coatings found in the prior art, the present invention is responsible for effecting substantially decreased corrosive attack to the underlying metal substrate at elevated temperatures and/or pressures over a prolonged period of time. The present invention also provides a method of producing such a composite as well as a formulation, the use of which will produce the barrier coatings, sheets and shaped articles of the present invention.

As will be described in greater detail below, the additive-containing polymer compositions of the present invention many be divided for convenience into three groups based upon the uses to which they are put: primer coatings, barrier coatings, and abrasion/wear resistant functional coatings.

Primer coatings bond very strongly to the underlying metal substrate and themselves provide a substrate to which coatings having other properties may be strongly bonded. In applications where improved bonding of a protective resin overlay is sought, the coating composition may be applied as a "primer coating" to the underlying metal substrate.

Barrier coatings provide a barrier between the substrate to which they are bonded and a corrosive environment. In applications where improved corrosion-resistance of a protective resin overlay is sought, the coating composition may be applied directly to the metal substrate or over a previously applied resin coat, for example, over a primer undercoat.

In certain instances, there may be an overlap in the use to which a given composition may be put, that is, certain of the compositions bond strongly to a metal substrate and at the same time provide a superior barrier to chemical attack. In addition, as a general rule, polymer compositions of the present invention which bond most strongly to the substrate are useful also as abrasion-resistant coatings applied directly to the substrate or over other polymer coats.

Accordingly, in applications where improved abrasion-resistance of the coating is sought, the coating composition may be applied as an outermost layer over previously applied resin layers or in direct contact with the metal substrate.

Compositions useful particularly for forming primer coatings include (1) a fluorocarbon resin (A) above in admixture with an additive of (B) and/or (C) above.

Compositions useful particularly for forming a corrosion-resistant barrier coating include a fluorocarbon resin (A) above in admixture with an additive of (C) above.

Compositions useful particularly for forming abrasion- and wear-resistant surfaces or top coatings include a fluorocarbon resin (A) above in admixture with an additive of (C) above.

The fluorocarbon resins (A) above are known classes of resins Species of such resins are available commercially.

The fluorocarbon resins (A) above are used in the practice of the present invention in fine particle size form. It is recommended that the particle size of the resins be about 1 to about 200 microns, preferably about 20 to about 120 microns.

As mentioned above, PFA is a preferred fluorocarbon resin for use in the practice of the present invention. Examples of commercially available PFA resins are TEFLON-P 532-5012 PFA powder resin which is manufactured by E. I. DuPont de Nemours & Company, Inc. of Wilmington, Delaware and which is described in DuPont Fact Sheet Tl-14-84, and Neoflon AC-5539 and Neoflon AC-5500 PFA powder resin, both manufactured by Daikin Industries, Ltd. of Osaka, Japan.

DuPont recommends said 532-5012 resin for use as an intermediate resin to be overlayed onto other primer systems, followed by the application of other top coat resins overlayed onto a coating formed from the 532-5012 resin. Daikin, likewise, recommends said AC-5500 or AC-5539 resins for use as a top coat resin to be overlayed onto an intermediate resin which, in turn, is overlayed onto a primer resin. (DuPont's 850-300 Teflon primer system, believed to consist of a chromium oxide-containing polytetraflurorethylene, is recommended by both Daikin and DuPont as a primer resin). However, the aforementioned 532-5012 resin and the AC-5500 and 5539 resins have been found to be a quite acceptable resins for forming primer coatings when used in accordance with the present invention.

Examples of other commercially available fluorocarbon resins for use in the practice of the present invention include AUSIMONT'S HALAR^{R} 6014 E-CTFE copolymer resin; DuPont's TEFZEL^{R} 532-600 E-TFE copolymer resin; and Kreha Corporation of America's KF polymer poly(vinylidine fluoride) resin (PVDF).

Turning now to a description of the property-improving additive of the present invention, they are also known materials. Preferably, the particle size of the additive does not exceed the particle size of the resin (A) constituent. It appears that the additive is present in the fused coating in discrete particle form. In the case of an organic additive, the shape of polymeric particles are changed by the heat of the fusing process.

With respect to additive (B) above, that is, poly(phenylene sulfide), examples of commercially available PPS resins which can be used are Ryton type V-1, P-4 or P-6 as manufactured by the Phillips Chemical Company of Bartlesville, Oklahoma. The Ryton type V-1 PPS resin is most preferred. The PPS should be used in fine particle size form. It is recommended that the particle size thereof be about 1 to about 200 microns, preferably about 10 to about 100 microns.

With respect to the property-improving additive of (C) above, such materials are selected cermaic powders of fine particle size, inorganic crystalline materials. A ceramic powder is characterized typically by its ability to be converted by sintering into a chemically inert material. Examples of ceramic powders that can be used as additive (C) above are: refractory carbides such as silicon carbide, zirconium carbide, tungsten carbide, or boron carbide; a nitride such as boron nitride and silicon nitride; oxides, particularly of metal, such as powdered quartz, silicon oxide, and zirconium oxide; a diboride such as zirconium diboride and tungsten diboride.

The ceramic powder can be in various forms, for example, in the form of regularly or irregularly shaped crystals, whisker fibers, long fibers, and platelets.

Metal carbide powders are a preferred additive for use in the present invention. The preferred carbides include silicon carbide, zirconium carbide, tungsten carbide and boron carbide, silicon carbide being most preferred.

A consideration in selecting the type of ceramic powder to be used is its resistance to the corrosive effects of the chemical material with which the resin composite material is to be used. It is believed that alpha silicon carbide is the most corrosive resistant type of ceramic powder available in respect to corrosive attack by a very broad range of chemical materials. Thus, it is highly preferred. In addition, silicon carbide is a low-cost material. However, for a variety of reasons, such as cost factors, etc., another type of ceramic powder may be selected.

Examples of commercially available silicon carbide powders are 39 Crystolon green silicon carbide flour as marketed by the Norton Company of Worcester, Massachusetts and Arendahl SIKA SiC powder, marketed through Standard Oil Electrominerals Co. of Niagara Falls, New York. These are recommended for use in the practice of the present invenion.

The ceramic powder to be used is preferably no larger than the particle size of the resins with which it is to be mixed and should be within the size range of about 1 micron to about 40 microns, most preferably up to about 5 microns in size.

There follow hereafter general descriptions of the effects that the property-improving additives have on coatings formed from compositions of the present invention and also general observations respecting the characteristics of coatings of the present invention.

In general, it has been observed, most notably in the use of ceramic powders, particularly with fluorocarbon resins, that bond strength between the coating and an underlying metal substrate increases with increased quantities of ceramic powder in the composition. On the other hand, resistance to corrosion by chemical attack is observed to be highest where relatively small amounts of ceramic powder are added to the resin, corrosion resistance being observed to decrease as amounts of ceramic powder in the resin are further increased.

Applications of composite mixtures of SiC-containing resins as coatings to metal roll surfaces which are subject to high abrasion and wear as well as high nip roll loading at elevated temperature provide exceptional life performance in resistance to damage in applications such as papermaking, calendering and extrusion lamination, for example, of plastics employed in packaging and similar industries.

Where release characteristics are desired, a fluoropolymer, for example PFA, may be added to the formulation to impart release properties. Other applications for release, corrosion-barrier, wear- and load-resistant coatings will be evident to those with experience in end use application materials.

In general, the smaller the particle size of the resin constituent, the better the properties of the coatings.

The major constituent of the composition of the present invention is a fluorocarbon resin (A) above, the property-improving additive being present in a minor amount. Additives providing an improved resin barrier coating which inhibits corrosion of an underlying metal substrate should be used in amounts of 1 to 25 wt. %, preferably 1 to 20 wt. %, and most preferably 2 to 5 wt. %.

There follow descriptions of preferred embodiments within the scope of the present invention.

In a preferred embodiment of the present invention, a perfluoroalkoxy (PFA) resin is used to form a primer coating. The primer coating, that which is directly in contact with the underlying substrate, most typically a metal surface, is a PFA resin, predominantly in a powder size range of 1 micron to 200 microns, preferably predominantly in a range of 20 microns to 120 microns, preferably modified with the addition of PPS in an amount of 2 to 20 wt. %, most preferably 5 to 10 wt. %.

A very acceptable primer coating can be prepared from a composition comprising 7 wt. % of Ryton type V-1 PPS resin and 93 wt. % of Neoflon AC-5500 PFA resin.

In another embodiment of the present invention, an overlay or barrier top coating is formed from a composition comprising PFA and ceramic powder, using as the PFA TEFLON-P 532-5010 PFA powder resin which is marketed by DuPont (Fact Sheet Tl-13-84). The ceramic powder is used in an amount preferably within the range of about 0.5 to about 5 wt. %, most preferably about 1 to about 3 wt. %.

In another embodiment of the present invention, ethylene-chlorotrifluoroethylene (E-CTFE) copolymer resins, ethylenetetrafluoroethylene (E-TFE) copolymer resins, or poly(vinylidine fluoride) (PVDF) resins are used to form primer coatings, but modified with the addition of a selected ceramic powder, preferably a metal carbide, and most preferably silicon carbide or zirconium carbide, in an amount of 1 to about 25 wt. %, most preferably 2 to 20 wt. %.

Where the fluorocarbon resins are used to form a corrosion-resistant barrier coating, they may be modified to advantage with a selected ceramic powder in an amount of 0.5 to 5 wt. %, preferably 1 to 3 wt. %, and most preferably 2.5 wt. %.

In applications subject to abrasion and wear, an outer top coating of any of PFA, E-CTFE, E-TFE and PVDF in admixture with less than 50 wt. % of ceramic powder, preferably silicon carbide or zirconium carbide, may be used to advantage.

A very acceptable primer coating of E-CTFE can be prepared from 10 wt. % 39 CRYSTOLON green silicon carbide flour (up to 5µ in particle size) and 90 wt. % of AUSIMONT'S HALAR^{R} 6014 E-CTFE resin.

A very acceptable corrosion-resistant barrier top coating of E-CTFE can be formed from 2.5 wt. % of 39 CRYSTOLON green silicon carbide flour (up to 5µ in particle size) and 97.5 wt. % of AUSMONT'S HALAR^{R} 6014 E-CTFE resin.

Additional acceptable primer coatings may be formed from 25 wt. % 39 CRYSTOLON silicon carbide and 75 wt. % DuPont TEFZEL 532-6000 E-TFE copolymer. A 5 wt. % SiC-containing coating of TEFZEL may be used to excellent advantage as a corrosion-resisting barrier coating.

A composition comprising 5 wt. % 39 CRYSTOLON silicon carbide and 95 wt. % Kreha corporation of America KF polymer PVDF resin may be used to advantage in forming a barrier coating having excellent corrosion-resistant properties.

In a most preferred embodiment of the invention, there is provided a composite of a build up of PFA mixed with the addition of 1 to 20 wt. %, preferably 1 to 5 wt. %, and most preferably 2 wt. % of a selected ceramic powder dispersed within the PFA resin, as a top barrier coating, overlayed onto and integrally bonded to a primer coating of either PFA/poly(phenylene sulfide), or a mixture of PFA and ceramic powder, either of which in turn is overlayed onto and integrally bonded to a metal substrate, in particular a metal substrate.

The described resin-based composite is particularly useful when applied to the tips of agitator blades subject to high abrasion and wear, particularly when exposed to mixing liquids containing abrasives. In such applications, preferred coatings include a SiC-containing resin coating applied directly to the metal substrate or over a fluorocarbon resin-based primer coating.

The present invention encompasses applying an undercoat of resin/additive composition to a substrate and integrally heat bonding it to the substrate followed by the application of successively built-up top coat layers and integrally bonding each, respectively, to both the undercoat and each preceding layer ofthe top coat. The coating composition may be applied in a dry powder form, electrostatically, or by a wet spray system, or by other known methods such as, for example, fluidized bed methods, floccing methods, etc.

The present invention emcompasses also a method of applying coating composition by wet spraying to form both the top coating and the primer coating, as well as the process of forming the aforementioned as a barrier coating and also a formulation for wet-spraying the coating composition.

### PRE-APPLICATION PREPARATION OF TOP COAT RESIN

In preparing the resin for application to the substrate, a preferred procedure is described below for a fluorocarbon resin and ceramic dry powder mixture of PFA and silicon carbide.
1. Five micron sized SiC powder is weighed out and sieved through a series of Tyler mesh screens to break up agglomerations. Two wt. % of the sieved silicon carbide powder is then placed in a suitable container for roller mixing.
2. Ninety-eight wt. % PFA resin is then added to the sieved silicon carbide powder in the roller mixing container and that container is sealed.
3. The sealed container should be shaken thoroughly to disperse and separate the particles of silicon carbide powder to ensure that agglomeration does not occur.
4. The sealed container is then placed on a roller mill and rolled for about 0.5 hour to fully and evenly mix the two components together to produce a homogenous mixture of the resin and the silicon carbide powder.
5. The mixture, now ready for application, is emptied from the container into the fluidized bed hopper of an electrostatic spraying apparatus which is used to apply the primer resin, as well as the overlay or top coat resin mixture, the preparation of which has been described above.

### PREPARATION OF METAL SUBSTRATE FOR COATING

Before any of the resins can be applied, the substrate metal, preferably carbon steel, must be cleaned such that it is free of oils, greases, blasting grit, water and other contaminants to the degree reasonably practicable in generally accepted shop conditions in the coating industry. After the surface of the substrate metal has been cleaned of surface contaminants, the following procedure may be used for the preparation of a mild low carbon steel substrate:
6. The steel piece is grit blasted with 3/0 (000) size silica (sand) which is both fresh (unused) and dry.
7. Within twelve (12) hours of the above described blasting step, preferably sooner, the metal pieces should be placed into an oven for heating.
8. A second blasting is recommended in humid weather to eliminate any rust which may have formed on the surface since the first blasting step.
9. Whether or not one or two blasting steps are utilized, just before the pieces are to be placed into the oven, the pieces should be vacuum cleaned and then thoroughly brushed.
10. As the pieces are being loaded into the oven, a thermocouple should be attached to each on a surface of the metal which is not to be coated with a barrier coating.
11. The bare substrate metal pieces are then "baked" in the oven set at 404°C (760°F), for a sufficient time to bring the temperature of the pieces up to 393°C (740°F), at which the pieces are "baked" in an air atmosphere for a period of at least one (1) hour but not more than eighteen (18) hours (to avoid unnecessary surface oxidation). Once the "bake-out" is finished, the pieces are now ready to be removed from the oven and sprayed with the primer resin.

### APPLICATION OF FLUOROCARBON RESIN AND ADDITIVE MIXTURE

A preferred procedure used for the application of a PFA/PPS primer coat to the metal substrate, following "bake-out" of the pieces is preferably as follows.

### A. PRIMER LAYER APPLICATION

12. The pieces should be removed from the oven with the temperature of the pieces being at least about 370 ° C (700 ° F). The first spraying of the primer resin should be commenced preferably within thirty (30) seconds from the time the pieces are removed from the oven with the temperature of the pieces preferably not being lower than about 360°C (680 °F), although it is quite acceptable that the finishing touches of the spraying may be added as long as the discrete section of each piece, which is then being sprayed, is above the resin melting point. Spraying may be done, simply, but not preferably, until no more of the powder primer resin melts onto the pieces The melt range of the PFA/PPS resin mixture is 302°C to 315°C (575°F to 600°F), but the powder resin will not normally melt as it hits the metal unless the metal is at about 315°C (600°F) or above. Preferably, the thickness of the primer resin coating will be within the range of about 0.05mm (0.002") to about 0.13mm (0.005"), although primer coat thicknesses in the range of about 0.03mm (0.001") to about 0.65mm (0.025") have been found acceptable. The primer resin is preferably applied in a single spraying, forming a single layer, although in some circumstances an additional layer or more may need to be applied. If such is necessary, additional coats of primer resin may be applied as follows.

### B. APPLICATION OF ADDITIONAL "PRIMER" LAYERS

13. After the first layer of primer resin has been sprayed onto the pieces, additional layers may be applied but are not necessary to improve bond strength. If an additional layer of primer resin is to be applied, the pieces are then returned to the oven. The oven should be set at about 370°C (700°F). When the temperatures of the pieces has reached 370°C (700°F) and all portions of the first coating have reached the melt phase, (usually requiring a soaking of about twenty (20) minutes), and if it is determined that one or more additional layers of primer resin are necessary, the pieces are again removed from the oven and a second layer of primer resin is sprayed on, overlaying the first layer. Because of notably poor heat transfer in fluorinated polymers, the first layer will hold the temperature of the pieces, allowing ample time for the second layer to be sprayed on at this temperature. The actual surface temperature of the first coat may drop to about 345°C (650°F) or less, but should not drop below about 315°C (600°F). The objective is to obtain a primer resin build up of about 0.05mm (0.002") to about 0.5mm (0.02").
14. Whether or not additional layers of primer resin are applied over the first layer of primer resin, following the last layer of primer resin sprayed on the pieces are returned to the oven which is set at 370°C (700°F) until inspection determines that the last layer of primer resin has reached the melt phase.

A procedure used for the application of a PFA/SiC top coat to a "primed" metal substrate is preferably as follows.

### C. APPLICATION OF TOP COAT LAYERS

15. The pieces are removed from the oven and sprayed with the first layer of top coat resin mixture. Care should preferably be taken to ensure that the temperature of the pieces being sprayed should always remain at or above the 302°C (575°F) to 315°C (600°F) melt range of PFA. The thickness of each layer of top coat resin which is sprayed should preferably within the range of about 0.15mm (0.0006") to about 0.25mm (0.01"), although layer thicknesses within the range of about 0.025mm (0.001") to about 0.4mm (0.015") have been found to be acceptable.
16. After the first layer of top coat resin mixture has been sprayed onto the pieces, they are placed back into the oven, now set at 370°C (700°F), and heat soaked until the just-sprayed resin coat has fully melted.
17. Successive layers of top coat resin mixture are applied in the same manner, following the specifications set forth in Step. Nos. 15 and 16 above. The objective is to form an overall barrier coating on the pieces which is at least 1mm (0.040") thick but which may be of a greater thickness. Thus, as many layers of top coat resin mixture are applied as are necessary to achieve such a thickness. After the last layer of top coat resin is applied, the pieces are first reduced in temperature to 290°C (550°F) in the oven. When the pieces reach 205°C, (400 ° F), they are removed from the oven and cooled to room temperature, thus being ready to place into service.

### WET SPRAY APPLICATION

Where there is a need to form a barrier coat type composite, in accordance with the present invention, in relation to the substrate metal of relatively large metal apparatus, such as tanks and pressure vessels, it is envisioned that spraying of the interior of hot vessels might be effected by the application of robotics technology; however, until such is developed, an alternate approach has been followed for spraying the coating composition of the present invention in wet form onto substrate metals at ambient temperatures, while still achieving the high integrity bonding of those resins and resin mixtures to the substrate metal, and to each other, substantially free of voids (porosity).

A preferred method of developing the composite of the present invention, using wet spraying, is as follows.

### A. PREPARATION OF AQUEOUS DISPERSION

Preliminarily, a top coat resin mixture in a water suspension is prepared most preferably comprising: 96.04 wt. % of PFA resin; 0.04 wt. % of Dow Corning Anti-Foam A antifoaming additive, marketed by Dow Corning Corporation of Midland, Michigan; 1.96 wt. % of 5*µ* silicon carbide; and water. To prepare a sample of the mixture in a water suspension, 100 ml of water are deposited into a mixer and two grams of Triton X-100 are added to the water. Thereafter, 0.05 gram of Anti-Foam A is added to the water. This is followed by the addition of 2 grams of silicon carbide to the aqueous solution. Thereafter, 98 grams of PFA resin is slowly added to the aqueous solution. It has been found that this formulation, in modified form, produces acceptable coatings where as much as 99.9 grams of PFA resin are added and as little as 0.1 gram of silicon carbide powder is mixed in.

### B. PRE-APPLICATION PREPARATION OF METAL SUBSTRATE

Secondly, the piece to which a barrier coating is to be bonded is prepared in exactly the same way as specified above in No. 6 through 11, with the prior cleaning step, prior to sand blasting, as specified above, included. Once the "bake-out" procedure has been completed the piece is removed from the oven and air cooled to below 38°C (100°F).

### C. WET SPRAY APPLICATION OF PRIMER COAT

Thirdly, a primer resin coat should be applied. A preferred primer resin coat may be the PFA/PPS resin mix described above or it may be the DuPont 532-5012 resin. Either of these may be applied electrostatically by spraying a preferred thickness of 0.05mm (0.002") to 0.13mm (0.005") per layer of resin to the cold (room temperature) piece. Then the piece is inserted back into the oven set at 370°C (700°F). The piece is brought up to temperature and held there until all portions of the primer resin layer have reached the melt phase. Following this, the piece is slow cooled to 290°C (550°F), as described above. Finally, the piece is removed from the oven to rapidly air cool to below 100°F for application of the next layer of primer resin, if necessary. Succeeding layers of electrostatically sprayed primer resin layers may be applied in exactly the same way. Applying the primer resin in this manner may require multiple layers as the sprayed on dry powder, to some extent, tends to fall off of the piece, decreasing the thickness of the layer.

Although the electrostatic dry spray method is preferred, alternatively, the primer resin may be applied wet. Usually, a 0.05mm (0.002") to 0.13mm (0.0005") thickness of primer resin coat can be applied in a single layer. The top coat resin mixture in a water suspension, described above, may, in a slightly modified form, be used as a primer resin. For example, in the case of a PFA/PPS primer resin described above, the only change necessary is to reduce the 96.04 wt. % of PFA resin to 90.00 wt. % and to add 6.04 wt. % of PPS resin. In preparing a sample mixture, as a preliminary step, 6.2 grams of PPS resin are thoroughly mixed and blended with 91.8 grams of PFA resin using a roller mill as described above. Then the sample mixture procedure for the water suspension, described above, is used except that the PFA/PPS resin mixture is added instead of the straight PFA resin. The silicon carbide may be, optionally, taken out in the primer resin mixture water suspension.

Prior to spraying on the primer resin mixture water suspension (primer wet spray), the "baked-out" piece, prepared as described above, is removed from the furnace and air cooled to less than 38°C (100°F). The air pressure used to apply the primer wet spray should, preferably, be within the range of about 275 kPa (40 psi) to about 345 kPa (50 psi).

The primer wet spray should be applied until a single layer in a range of about 0.05mm (0.002") to 0.13mm (0.005") thickness is built up, preferably in a range of about 0.1mm (0.004") to 0.13mm(0.005") as measured in the wet condition.

Once the primer wet spray coating has been applied, as a single layer, the piece is preferably air dried for about fifteen (15) minutes. Then the piece should be placed in a preheated oven set at 175°C (350°F). After the piece is so placed in the oven, without delay, the oven should be rest to 382°C (720°F). When the temperature of the piece reaches 370°C (700°F) and the primer wet spray coating, fully dried, and all surfaces thereof have reached the melt phase, the piece is cooled in the oven until it reaches 290°C (550°F). At this point the piece is removed from the oven and air cooled to below 38°F (100°F), preferably to room temperature, for application of the top coat wet spray.

### D. WET SPRAY APPLICATION OF TOP COAT SUSPENSION

The top coat wet spray may be the top coat resin mixture in a water suspension described above, without PPS resin and definitely with silicon carbide included. The top coat wet spray is sprayed onto the piece, preferably at room temperature, in layers, exactly following the spraying techniques described above for the primer wet spray resin, except that the thickness of each layer of top coat wet spray is greater, preferably in the range of about 0.25mm (0.010") to about 0.36mm (0.014").

After each layer of top coat wet spray is sprayed onto the piece, the piece is air dried for fifteen (15) minutes and placed into a preheated oven set at 177°C (350°F). Then, without delay, the oven is reset for 343°C (650°F) and the temperature of the part is brought up to the point where visual inspection assures that the now dried top coat wet spray layer is in the melt phase, or until the piece temperature reaches 327°C (620°F), whichever comes first. If the melt phase is reached before the piece temperature reaches 327°C (620°F), preferably, continue to heat the piece for about ten (10) minutes or until the piece reached 327°C (620°F), whichever comes first. Then the piece is cooled to 290°C (550°F), followed by removal of the piece from the oven for air cooling to below 38°C (100°F). This heating-cooling cycle is repeated for each layer of top coat wet spray applied.

Additional advantages of the present invention are that the use of a property improving additive, as described herein, is effective in increasing the rate at which the coating composition can be fused. By way of background and as exemplary of the aforementioned, it is known to those with skill in the field, as exemplified by the two (2) DuPont Fact Sheets mentioned above, that it is difficult to get good fusion or sintering of particles of PFA resin to each other, or to primer systems over metal substrates, at temperatures below about 370°C (700°F) within time periods that can be used practically in a commercial setting. Thus, it is conventionally recommended that PFA resins should be fused at about 385°C (725°F) for about 20 minutes. However, it is also known that PFA, as a fluorinated polymer, deteriorates (degrades) relatively quickly at temperatures of about 370°C (700°F) and above, as fairly rapid oxidation occurs. Thus, the objective is to effect a complete fusion of the resin particles before the resin itself degrades. It can be appreciated that it is relatively difficult to get good bonding of PFA resin to metal substrates and to get one layer of PFA resin bonded to another.

By way of example, neat powdered PFA resin, applied directly to a 203mm x 203mm x 6.5mm (8" x 8" x 1/4") mild steel plate brought to a temperature of about 385°C (725°F), fuses completely in about 20 minutes; at 357°C (675°F), fusion is completed in about 30 minutes; and at 327°C (620°F), fusion is completed in about 40 to about 50 minutes. The addition of powdered ceramic material to the resin significantly reduces the time necessary to complete the fusion of the resin particles. When powdered PFA resin and ceramic material is applied to a mild steel plate heated to 385°C (725°F), fusion of the resin is completed in about 10 minutes; at 357°C (675°F), fusion is completed in about 15 to about 20 minutes; and at 327°C (620°F) fusion is completed in about 30 to about 40 minutes.

Thus, a preferred method for forming a fused coating from the composition of the present invention includes heating said composition to a temperature for a period of time no longer than a predetermined period of time, said temperature being at least 14 deg C (25 deg F) below the temperature at which the resin of said composition in neat form can be fused completely by heating for no longer than said predetermined period of time without substantially degrading said resin.

It has also been observed that where neat powdered resins are applied to an already resin-coated metal substrate, the time to complete fusion is recited above. It is suspected that this longer fusion time is due to the heat insulating property of the previously applied neat resin layer. Thus, to effect complete fusion of the top-most resin layers, it is necessary to prolong the period over which the plate is heated, thereby degrading the bottom-most resin layers in closest proximity to the substrate surface.

The addition of ceramic powders to the resin speeds the fusion process, perhaps due to the improved heat conductivity of ceramic powder-containing resins. Thus, all of the resin layers may be brought to fusion temperature more quickly, reducing the exposure time and concomitant degradation of the bottom-most layers.

It is also known that it is relatively difficult to achieve bonding of straight PFA resin to metal substrates, regardless of the temperature of fusion or sintering used. It has now been determined that the addition of the above specified quantity ranges of PPS resin to the PFA resin, surprisingly results in a very high quality integral bonding of the PFA resin to substrate metals at temperatures in the range of about 357°C (675°F) to about 382°C (720°F) without significant deterioration (degradation) to the PFA. It is also now known that a very similar phenomenon occurs in dry sprayed PFA resin without the addition of PPS resin, but with the addition of the specified quantity ranges of fine crystalline ceramic powder, in those same temperature ranges.

### EXAMPLES

### EFFECT OF ADDING SiC TO PFA TO ELIMINATE RESIN BUBBLING

In the examples which follow, Sample Plates (A-G) were fabricated to determine the effects of adding silicon carbide to PFA resin in respect to the occurrence of bubbling of top coat layers during the build up of the barrier coat. In all cases, DuPont TEFLON-P 532-5012 PFA resin was used as the primer resin and DuPont TEFLON-P 532-5010 PFA resin mixed with silicon carbide powder (as indicated) was used as the top coat resin. The sample plates were formed using 6.3mm x 203mm x 203mm (1/4" x 8" x 8") size mild steel plates and composites were formed thereon in accordance with the foregoing procedures. The results are as follows in Table 1.

**TABLE 1**

| Sample Plate | A | B | C | D | E | F | G |
|---|---|---|---|---|---|---|---|
| Primer Thickness (mm(inch)) | 0.53 | 0.56 | 0.53 | 0.48 | 0.61 | 0.43 | 0.03 |
| | (.021) | (.022) | (.021) | (.018) | (.024) | (.017) | (.001) |
| No. of Layers | 2 | 2 | 2 | 2 | 2 | 2 | 1 |
| Top Coat PFA wt.% | 100 | 99.75 | 99.5 | 99 | 98 | 98 | 99 |
| SiC wt.% (Particle Size) | 0 | 0.25 | 0.50 | 1 | 2 | 2 | 2 |
| | - | 5*µ* | 5*µ* | 5*µ* | 5*µ* | 5*µ* | 5*µ* |
| Thickness (mm(inch)) | 0.2 (.008) | 0.18 (.007) | 0.18 (.007) | 0.18 (.007) | 0.2 (.008) | 1 (.040) | 0.46 (.018) |
| No. of Layers | 1 | 1 | 1 | 1 | 1 | 7 | 3 |
| Steel Temp. (°C(°F)) | 357 | 357 | 357 | 357 | 357 | 357 | 357 |
| | (675) | (675) | (675) | (675) | (675) | (675) | (675) |
| Barrier Coat Total Thickness (mm(inches)) | 0.74 | 0.74 | 0.71 | 0.64 | 0.81 | 1.45 | 0.48 |
| | (.029) | (.029) | (.028) | (.025) | (.032) | (.057) | (.019) |
| Bubbling | Yes | Slight | Very Slight | No | No | No | No |

### EFFECT OF SUBSTRATE TEMPERATURE

Several additional Sample Plates (H-L) were fabricated wherein composites were formed on underlying mild steel substrates in accordance with the foregoing procedures. The object of developing these samples was to determine the effect of lowering the metal substrate temperature in respect to the occurrence of bubbling of top coat layers during the build up of the barrier coat. Again, in all cases, DuPont TEFLON-P 532-5012 PFA resin was used as the primer resin and DuPont TEFLON-P 532-5010 PFA resin mixed with silicon carbide powder (as indicated) was used as the top coat resin. The Sample Plates were formed using 6.3mm x 203mm x 203mm (1/4" x 8" x 8") size mild steel plates. The results are as follows in Table 2.

**TABLE 2**

| Sample Plate | H | I | J | K | L |
|---|---|---|---|---|---|
| Primer Thickness (mm(inch)) | 0.43 (0.17) | 0.61 (0.24) | 0.25 (.010) | 0.56 (.022) | 0.28 (.011) |
| No. of Layers | 2 | 3 | 2 | 2 | 2 |
| Top Coat PFA wt.% | 100 | 99.5 | 99 | 98 | 99 |
| SiC wt.% (Particle size) | 0 | 0.5 | 1 | 2 | 1 |
| | - | 5*µ* | 5*µ* | 5*µ* | 5*µ* |
| Thickness (mm(inch)) | 0.38 (.015) | 0.79 (.031) | 0.15 (.006) | 0.2 (.008) | 0.86 (.034) |
| No. of Layers | 3 | 5 | 1 | 1 | 7 |
| Steel Temp (°C(°F)) | 330 | 324 | 330 | 330 | 330 |
| | (625) | (615) | (625) | (625) | (625) |
| Barrier Coat Total Thickness (mm(inch)) | 0.81 | 1.4 | 0.41 | 0.76 | 1.14 |
| | (.032) | (.055) | (.016) | (.030) | (.045) |
| Bubbling | Yes | No | No | No | No |

### EFFECT OF SiC PARTICLE SIZE ADDED TO TOP COAT

Several additional Sample Plates (M-R) were fabricated wherein composites were formed on underlying mild steel substrates in accordance with the foregoing procedures. The object of developing these samples was to determine the effect of adding larger sized particles of silicon carbide powder to the PFA top coat resin in respect to the occurrence of bubbling of top coat layers during the build up of the barrier coat. Again, in all cases, DuPont TEFLON-P 532-5012 PFA resin was used as the primer resin and DuPont TEFLON-P 532-5010 PFA resin mixed with silicon carbide powder (as indicated) was used as the top coat resin. The sample plates were formed using 6.3mm x 203mm x 203mm (1/4" x 8" x 8") size mild steel plates. The results are as follows in Table 3.

**TABLE 3**

| Sample Plate | M | N | O | P | Q | R |
|---|---|---|---|---|---|---|
| Primer Thickness (mm(inch)) | 0.25 (.010) | 0.53 (.021) | 0.51 (.020) | 0.51 (.020) | 0.51 (.020) | 0.51 (.020) |
| No. of Layers | 1 | 3 | 2 | 2 | 3 | 2 |
| Top Coat PFA wt.% | 90 | 99.5 | 90 | 80 | 99 | 98 |
| SiC wt.% (Particle Size) | 10 | 0.5 | 10 | 20 | 1 | 2 |
| | 7*µ* | 7*µ* | 7*µ* | 7*µ* | 14*µ* | 14*µ* |
| Thickness (mm(inch)) | 0.89 | 0.66 | 1 | 1 | 0.53 | 0.53 |
| | (.035) | (.026) | (.040) | (.040) | (.021) | (.021) |
| No. of Layers | 6 | 5 | 6 | 10 | 4 | 4 |
| Steel Temp. (°C(°F)) | 360 | 324 | 316 | 343 | 327 | 327 |
| | (680) | (615) | (600) | (650) | (620) | (620) |
| Barrier Coat Total Thickness (mm(inch)) | 1.14 | 1.19 | 1.52 | 1.52 | 1.04 | 1.04 |
| | (.045) | (.047) | (.060) | (.060) | (.041) | (.041) |
| Bubbling | No | No | No | No | No | No |

### BOND STRENGTH DETERMINATIONS FOR SiC-CONTAINING E-CTFE COATINGS

The next group of examples illustrates the effect on bond strength between the coating and the underlying metal substrate by increasing the concentration of SiC in the primer coat layer.

Several additional sample plates (S-X) were fabricated wherein composites were formed on underlying mild steel substrates in accordance with the procedures described above with the following departures from the enumerated protocol. The workpieces to be coated were cleaned by a single grit blasting with 80 grit aluminum oxide (Step 6) and "baked" in an oven at 316°C (600°F) (Step 11). A primer coat was applied to workpieces brought to a temperature of about 500°F (Step 12). Workpieces were returned to the oven and brought back up to 260°C (500°F) before application of each succeeding coat (Step 16). Coatings were applied before the workpiece cooled below 240°C (465°F) (Step 15).

All bond strength determinations were made according to ASTM D3167-76 (Reapproved 1981), entitled "Standard Test Method for Floating Roller Peel Resistance of Adhesives", with the exception that an equivalent to the fixture for supporting the test specimen, described in paragraph 4.2 of ASTM D3167-76, was used to the same end result.

In samples S-W, Ausimont's HALAR^{R} 6014 ethylenechlorotrifluoroethylene copolymer (100% E-CTFE) was used as a primer coat resin with Norton Company's 39 Crystolon green silicon carbide flour 4647 (1000 grit) in admixture therewith in the amounts indicated in Table 9 below. The primer coat layer applied to each plate was followed by five ten-mil thick coats of neat, 100% E-CTFE, giving a total coating thickness of 1.35mm to 1.4mm (53 to 55 mils).

In sample plate X, Ausimont's HALAR^{R} 6614 E-CTFE primer system, believed to contain, as its major ingredient, E-CTFE, with chromium oxide as a minor additive, was first applied followed by five applications of AUSIMONT'S HALAR^{R} 6014 neat E-CTFE top coat resin.

Sample plates were formed using 6.3mm x 203mm x 203mm (1/4" x 8" x 8") size mild steel plates. The results of the bond strength testing are as follows in Table 4.

**Table 4**

| E-CTFE COATING BOND STRENGTH TESTING | | | | | | |
|---|---|---|---|---|---|---|
| Sample Plate | S | T | U | V | W | X |
| Primer Coat | | | | | | |
| E-CTFE¹ wt.% | 100 | 95 | 90 | 85 | 75 | N.D.³ |
| SiC² wt.% | 0 | 5 | 10 | 15 | 25 | 0 |
| Particle Size | - | 5µ | 5µ | 5µ | 5µ | - |
| Cr₂O₃ wt.% | 0 | 0 | 0 | 0 | 0 | N.D.³ |
| Thickness | approx. 0.08-0.13mm (3-5 mil) (all) | | | | | |

| Top Coat | | | | | | |
|---|---|---|---|---|---|---|
| E-CTFE wt.% | 100% (all) | | | | | |
| Thickness | 1.27mm (50 mil) (all) | | | | | |
| No. of layers | 5 (all) | | | | | |

| Peel Strength | | | | | | |
|---|---|---|---|---|---|---|
| (N/mm (pli)) | 10 | >30 | >23 | >20 | >18 | >13 |
| | (60) | (>180⁴) | (>134⁴) | (>110⁴) | (>104⁴) | (75) |

| | | | | | | |
|---|---|---|---|---|---|---|
| ¹Ausimont HALAR^{R} 6014 E-CTFE resin. | | | | | | |
| ²Norton Company 39 Crystolon green silicon carbide flour 4647, Worcester, Mass. | | | | | | |
| ³Ausimont HALAR^{R} 6614 E-CTFE primer system, believed to consist of a major volume of E-CTFE and a minor amount of Cr₂O₃. | | | | | | |
| ⁴ Value shown is actually a measurement of the cohesive strength of the coating. Adhesive (bond) strength of the coating to the substrate believed to be considerably higher than cohesive strength value shown. | | | | | | |

In sample plate S, coated with neat (0 wt. % SiC) E-CTFE in both the "primer" layer and top coat layers, bond strength between the "primer" coat layer and metal substrate was relatively low, around 10N/mm (60 pounds/linear inch (pli)). Sample plate X, prepared with the manufacturer's recommended primer system, (HALAR^{R} 6614 E-CTFE primer) believed to contain a minor amount of chromium oxide, fared slightly better than sample plate S, giving a bond strength between the primer coat layer and metal substrate of 13N/mm (75 pli), an improvement of about 25%.

The actual bond strength of the sample plate T coating to the substrate could not be precisely determined because the strips of coating being peeled away from the substrate during testing ripped apart shortly after peeling was initiated. Thus, the value shown is actually a measure of the cohesive strength of the coating being peeled away from the substrate during the test.

In sample plates U, V, and W, having 10, 15 and 25 wt. % SiC, respectively, in admixture with the E-CTFE resin as the primer coat, the bond strength between the coating and metal substrate was, like sample plate T, so great that it exceeded the cohesive strength of the strip of coating being peeled away from the substrate.

The apparent decrease in bond strength in coatings having increased amounts of SiC, actually a decrease in the coating cohesive strength, not adhesive strength, is believed to be due to the increased brittleness of the primer coat layer brought about by the elevated SiC content. Thus, as the strip was peeled away from the substrate during the test, the more brittle, higher SiC-containing primer coat layer caused the strip of coating being peeled to tear more easily, the tear being initiated by a fracture in the brittle primer coat.

In an effort to determine an actual bond strength value for SiC-containing E-CTFE coatings, a sample plate having a coating corresponding to that applied to sample plate U was prepared, this time with a piece of metal screen embedded in the top coat layers. The screen, 150mm x 225mm (6" x 9") dimension, was positioned over the 10 wt. % SiC-containing primer coat layer and the top coat layers applied over the screen in the same manner as described for the preparation of plate U. The screen was intended to provide a substantial reinforcement of the coating as it was being peeled away from the substrate. Despite the addition of the reinforcing screen in the strip of coating being peeled away from the substrate, the strip fractured, stretching the screen embedded in it, just after the point at which a value of 26 N/mm (150 pli) had been measured.

### CORROSION-RESISTANCE DETERMINATION FOR SiC-CONTAINING E-CTFE COATINGS

In the examples which follow, the corrosion resistance of SiC-containing E-CTFE coatings is illustrated. Sample plate Y, corresponding to sample plate U described above, was prepared by applying a 0.08mm-0.13mm (3-5 mil) thick primer coat layer or E-CTFE (HALAR^{R} 6014) having 10 wt. % SiC admixed therewith, followed by five successive coats of E-CTFE (HALAR^{R} 6014) having 2.5 wt. % SiC admixed therewith. A 10 wt. % SiC-containing E-CTFE primer coat layer was selected on the basis of the bond strength test results reported in Table 4 above and was deemed to represent a primer coat having a preferred bond strength. A 2.5 wt. % SiC-containing E-CTFE top coat was selected on the basis of the superior corrosion test results observed for 2 wt. % SiC-containing PFA top coat resins.

For purposes of comparison, sample plate Z was prepared in the same manner as sample plate X in Table 4 above, (one 0.08-0.13mm (3-5 mil) primer layer coat of Ausimont HALAR^{R} 6614 E-CTFE, believed to contain chromium oxide, followed by five successive 10 mil coats of neat E-CTFE (Ausimont HALAR^{R} 6014)).

Both sample plates Y and Z were subjected to Atlas Cell testing for corrosion resistance (20% HCI @ 104°C (220°F)) and observations of the respective coatings made at 300, 600 and 1000 hours. Prior to the Atlas cell testing, each plate was spark tested for pinholes in the coating by testing with a Wegener WEG 20 High Frequency Spark Tester set to 20 kV (AC). The power level at which spark testing was conducted was considerably more demanding of the coatings being tested than is recommended by the Society of Plastics Industry (SPI) Test Method for Detecting Faults in Corrosion Resistant Fluoropolymer Coating Systems, No. FD-118. SPI recommended test voltages do not exceed 6,000 volts (DC). No pinholes were detected in either plate spark tested. The results appear in Table 5 below.

**Table 5**

| E-CTFE CORROSION RESISTANCE TESTING | | |
|---|---|---|
| Hours | Sample Plate | |
| | Z | Y |
| 300 | no change | no change |
| 600 | small blister (3mm) forming | no change |
| 1000 | small blister increasing in size (14mm) and beginning to crack; second small blister (3mm) forming | no change |

As Table 5 shows, SiC-containing E-CTFE barrier coatings were unaffected by exposure to hot (104°C (220°F)) 20 % HCI even after exposure for 1000 hours.

In comparison, the AUSIMONT barrier coat system began to blister after 600 hours of exposure under the same acid conditions. Blistering suggests two modes of failure for the system: (1) permeation of the top coat layer by HCI and (2) insufficient bonding of the primer coat layer to the metal substrate (13N/mm (75 pli)), permitting a direct chemical attack on the underlying metal substrate, lifting the coating, exacerbating coating failure. No failure was evident after 1000 hours of hot acid exposure in the SiC-containing E-CTFE system.

### BOND STRENGTH DETERMINATION FOR ZrC-CONTAINING E-CTFE COATING

In this example, the bond strength of a 10 wt. % zirconium carbide-containing E-CTFE coating was determined. The zirconium carbide (Z-1034, a product of Zerac/Pure, Milwaukee, Wisconsin) had a 5*µ* particle size. Coating application and bond strength testing were carried out as described for SiC-containing E-CTFE. Bond strength was determined to be in excess of 33N/mm (190 pli), the value measured just prior to the cohesive failure of the strip of coating being peeled from the substrate.

### BOND STRENGTH DETERMINATIONS FOR SiC-CONTAINING E-TFE COATINGS

The object of developing these samples was to determine the effect on bond strength between an ethylenetetrafluoroetylene copolymer (E-TFE) coating and underlying metal substrate of adding SiC in increasing concentrations to the primer coat layer. Sample plates were prepared wherein E-TFE composite barrier coatings were formed on underlying mild steel substrates in accordance with the procedures described immediately above for E-CTFE with the exception that after grit blasting, workpieces were "baked" at 277°C (530°F) (Step 11) and the primer coat and all subsequent top coats applied with the workpiece at a temperature of 274°C (525°F) (Step 12).

In samples AA-EE, Dupont's TEFZE^{L} R ethylene-tetrafluoroethylene copolymer (E-TFE) was used as a primer coat layer with Norton Company's 39 Crystolon green silicon carbide flour 4647 (1000 grit) in admixture therewith in the amounts indicated in Table 6 below.

**Table 6**

| E-TFE COATING BOND STRENGTH TESTING | | | | | |
|---|---|---|---|---|---|
| Sample Plate | AA | BB | CC | DD | EE |
| Primer Coat | | | | | |
| E-TFE¹ wt. % | 100 | 95 | 90 | 85 | 75 |
| SiC² wt. % | 0 | 5 | 10 | 15 | 25 |
| Particle Size | - | 5µ | 5µ | 5µ | 5µ |
| Thickness | 3-5 mil (all) | | | | |

| Top Coat | | | | | |
|---|---|---|---|---|---|
| E-TFE wt. % | 100% | | | | |
| Thickness | 0.69 | N.D. | 0.76 | 0.76 | 0.89 |
| (mm(mils)) | (27) | | (30) | (30) | (35) |
| No. of layers | 10 | N.D. | 10 | 10 | 10 |

| Peel Strength | | | | | |
|---|---|---|---|---|---|
| (N/mm(pli)) | 5.1 | N.D. | 4.9 | 5.4 | 65.7 |
| | (29) | | (28) | (31) | (37.5) |

| | | | | | |
|---|---|---|---|---|---|
| ¹TEFZEL^{R} 532-6000 ethylene-tetrafluoroethylene copolymer sold by Dupont. | | | | | |
| ²39 CRYSTOLON green silicon carbide flour 4647 of Norton Co. | | | | | |

From Table 6, bond strength between E-TFE and the metal substrate is observed to improve measurably with increased amounts of SiC. A 23% improvement over neat E-TFE is obtained by the addition of 25 wt. % SiC.

### CORROSION-RESISTANCE DETERMINATION FOR SiC-CONTAINING E-TFE COATINGS

In the examples which follow, the corrosion-resistance of SiC-containing E-TFE coatings is illustrated. Sample plate GG was prepared corresponding to sample plate EE above, that is, having a "primer" coat layer of 75 wt. % E-TFE/25 wt. % SiC and "top" coat layers of 95 wt. % E-TFE/5 wt. % SiC. For comparative purposes, sample plate FF, corresponding to sample plate AA above, was prepared having a neat E-TFE coating applied thereto.

E-TFE coatings applied to sample plates FF and GG and corrosion test results are summarized in Table 7 below.

**Table 7**

| E-TFE CORROSION-RESISTANCE TESTING | | |
|---|---|---|
| | FF | GG |
| Primer Coat | | |
| E-TFE wt. % | 100 | 75 |
| SiC wt. % | 0 | 25 |
| Thickness (mm(mils)) | 0.08-0.13 (3-5) | 0.08-0.13 (3-5) |

| Top Coat | | |
|---|---|---|
| E-TFE wt. % | 100 | 95 |
| SiC wt. % | 0 | 5 |
| Thickness (mm (mils)) | 0.94 (37) | 1(40) |
| No. of Coats | 10 | 6 |

| Corrosion Test | | |
|---|---|---|
| 300 hours | no change | no change |
| 600 hours | no change | no change |
| 1000 hours | test area has developed hundreds of pin holes throughout due to the extensive cracking of the exposed coating surface | a single pinhole has developed in the coating |

After 1000 hours of hot acid (20% HCI at 104°C (220°F)) exposure, the neat E-TFE coating of sample plate FF was literally riddled with pinholes (2-3 pinholes/cm²) with extensive discrete micro-cracks throughout, each crack about 3mm or so in length. In comparison, the SiC-containing E-TFE coating of sample plate GG developed a single pinhole and no evidence of any cracking after 1000 hours of hot acid exposure. Pinholes were detected using a WEG 20 Wegener High Frequency Spark Tester set to 20kv (AC).

In addition to the superior corrosion-resistance of the SiC-containing E-TFE coating, the admixture of SiC was seen to reduce shrinkage of the coating applied. On a scale of 1 to 5 (1 being no visible coating shrinkage and the coating is observed to flow smoothly around the sample plate edge without thinning; 5 being severe coating shrinkage and the coating is observed to form shrinkage ridges pulled in over 6.3mm (1/4") from the edge of the sample plate), neat E-TFE coatings experienced severe shrinkage, for a rating of 5, while shrinkage of 95 wt. % E-TFE/5 wt. % SiC coatings (applied over a 0.08-0.13mm (3-5 mil) primer coat of 75 wt. % E-TFE/25 wt. % SiC) was very low, for a rating of 2 (slight shrinkage - just starting to thin or pull in at the corners).

Further, the addition of SiC was seen to improve surface uniformity of the applied coating. Neat E-TFE coatings tended to be uneven with large bumps and waves unevenly distributed across the coating surface, giving a mottled effect, whereas the addition of only 5 wt. % SiC rendered E-TFE coat smooth and uniform. High surface gloss of E-TFE coatings remained unaffected by the addition of SiC.

Still further, the addition of SiC to E-TFE was seen to improve the "buildability" of the electrostatically applied coating. Ten coats of neat E-TFE were required to achieve a 0.94mm (37 mil) thick top coat whereas only 6 coats of 5 wt. % SiC containing E-TFE were required to achieve a 1mm (40 mil) thick top coat, an improvement over nearly 180% (0.17mm (6.6 mils))/coat vs. 0.09mm (3.7 mils)/coat. The phenomenon observed appears to reside in the amount of dry E-TFE powder that will adhere to the sample plate during electrostatic deposition. SiC-containing E-TFE dry powder was observed to build to a greater depth than neat E-TFE dry powders. A possible explanation for the observed phenomenon may be that the positively charged resin powder insulates the negatively charged piece being electrostatically coated. Once insulated, the charged workpiece cannot attract additional powder and, in fact, additional powder sprayed on the piece is repelled or simply falls away. The addition of SiC to the resin powder may improve the powder conductivity, thereby permitting a thicker layer of dry resin powder to be attracted to the substrate before reaching a thickness great enough to insulate the underlying substrate.

Overall, the addition of SiC to E-TFE coatings was seen to improve coating bond strength, dramatically improve corrosion resistance, markedly reduce coating shrinkage, significantly improve surface uniformity, and provide nearly a two-fold improvement in "buildability".

### CORROSION-RESISTANCE DETERMINATION FOR SiC-CONTAINING PVDF COATINGS

In the following examples, the corrosion resistance of SiC-containing poly(vinylidene fluoride) (PVDF) top coats applied over a Cr₂O₃-containing PVDF "primer" coat is illustrated. Sample plates HH and II were coated according to the procedures already described for E-CTFE with the exception that after grit blasting, the plates were "baked" at 288°C (550°F) (Step 12). Between subsequent coating applications, the plates were returned to 260°C (500°F). Top coatings were applied before the plates cooled below 177°C (350°F) (Step 15).

A 0.08-0.13mm (3-5 mil) thick primer coat of KF Polymer poly-(vinylidene fluoride) (PVDF), a Kureha Chemical Industry Co. of Japan product, admixed with 5 wt. % chromium oxide (Cerac, Inc., Milwaukee, Wisonsin), was applied to both sample plates tested. To sample plates HH and II, were applied top coats of PVDF resin having in admixture therewith 0 and 5 wt. % SiC respectively.

Plates HH and II were concurrently subjected to Atlas cell testing (20% HCI at 104°C (220°F)) and observations of the coatings made at 300, 600 and 1000 hour intervals. Each plate was spark tested at 20 kV (AC) and found free of pinholes. Results of Atlas cell tests are summarized in Table 8 below.

**Table 8**

| CORROSION-RESISTANCE DETERMINATION FOR PVDF | | |
|---|---|---|
| Sample Plate | HH | II |
| Primer Coat | | |
| PVDF¹ wt. % | 95 | 95 |
| Cr₂O₃ wt. % | 5 | 5 |
| Particle Size | <10µ | <10µ |
| Thickness | 0.08-0.13mm | 0.08-0.13mm |
| | (3-5 mils) | (3-5 mils) |

| Top Coat | | |
|---|---|---|
| PVDF wt. % | 100 | 95 |
| SiC | 0 | 5 |
| Particle Size | -- | 5µ |
| No. of layers | 3 | 4 |
| Thickness (mm(mil)) | 1.14 (45) | 1.27 (50) |

| Atlas Cell Test | | |
|---|---|---|
| 300 | large (11mm) | very small |
| | blister | (4mm) blister |
| | formed | beginning to |
| | | form |
| 600 | blister enlarged | blister |
| | to 15 mm causing | enlarged |
| | disbonding in | to 6mm |
| | area | |
| 1000 | blister continues | pinhole |
| | to enlarge | developed in |
| | (23mm); pinhole | 6mm blister |
| | in blister | |
| | formed. | |

| | | |
|---|---|---|
| ¹PVDF KF Polymer poly(vinylidine)fluoride, Kureha Chemical Industry Co. of Japan. ²Cr₂O₃, Cerac, Inc., P.O. Box 1178, Milwaukee, Wisconsin 53201 | | |

As Table 8 shows, sample plate II, having a 5 wt. % SiC/95 wt. % PVDF top coat, was much less susceptible to blistering than sample plate HH having a neat PVDF top coat. The addition of SiC to the PVDF top coat significantly reduced permeation by hot HCI (20% HCI @ 104°C (220°F)) as evidenced by the greatly reduced extent of blistering, notwithstanding the use of a Cr₂O₃-containing "primer" coat layer of PVDF.

### PREPARATION OF SiC-CONTAINING PFA SHEETS

The object of the example which follows was to demonstrate the preparation of a sheet of SiC-containing PFA resin.

The sheet was formed on a mild steel plate which had been cleaned according to the procedures described above, including grit blasting with 80 grit aluminum oxide grit, vacuum cleaning and baking in an oven for eight hours to drive contaminants from the steel. The surface of the cleaned plate was first sprayed with a heat stable release agent (Frekote 32, a fluoropolymer product manufactured by Frekote, Inc. of 170 W. Spanish River Blvd., Boca Raton, Florida 33431) to permit a subsequently applied resin coating to be stripped cleanly away from the underlying substrate, then heated in an oven to between 360-370°C (680-700°F). The heated release agent-treated plate was then sprayed with six 0.2 to 0.25mm (8 to 10 mil) thick coats of a 2 wt. % SiC/98 wt. % PFA dry powder mixture to give a total coating thickness of 1.5mm (60 mils). The plate was reheated to 360-370°C (680-700°F) between each coat. After the final coat was applied, the coated metal plate was allowed to cool to ambient temperature and the coating stripped cleanly away from the substrate in the form of a sheet.

Continuous sheet production is contemplated through the use of endless thin steel belts, treated with a suitable release agent, heated between resin coating applications by passing the belts through a series of ovens heated, for example, by both convection and infrared radiation, the resin compositions being applied through spray nozzles spaced between ovens. Stainless steel belts, 18 to 24 gauge thick, manufactured by Sandvik Co. of 1702 Nevins Road, Fair Lawn, New Jersey 07410 would be suitable for this purpose.

### PREPARATION OF SHAPED ARTICLES ARTICLES OF SiC-CONTAINING PFA

The object of the example which follows was to demonstrate the preparation of a shaped article comprised of a resin/ceramic powder mixture of the present invention.

In this example, a 76mm (3") pipe elbow having a 1.27mm (50mil) wall thickness and comprised of 98 wt. % PFA/2 wt. % SiC was prepared from a two-part mold assembled from a 76mm (3") carbon steel pipe elbow, cut in half along its length. The inside surface of each pipe half was grit blasted with 80 grit aluminum oxide, the residue removed and the pipe halves baked in an oven for eight hours at 405°C (760°F) to remove contaminants. After cooling the pipe halves to room temperature, they were reassembled and the interior thereof coated with a release agent (Frekote 33) and the liquid excess removed.

The release agent-treated mold was returned to the oven and brought to a temperature of between 360-370°C (680 and 700°F) after which the mold was removed from the oven and the interior thereof electrostatically sprayed with the 98 wt. % PFA/2 wt. % SiC dry powder to form a coating thereon 0.2 to 0.25mm (8 to 10 mils) thick. The thus-coated mold was returned to the oven and again heated to 360-370°C (680-700°F) until the resin/SiC powder had fused to a smooth and glossy film. The coating process was repeated until the coating was 1.27mm (50 mils) thick. After cooling, the mold was disassembled and the PFA/SiC 76mm (3") elbow removed from the mold. The molded piece was tested for pinholes using a WEG 20 spark tester set to 50kV (AC). No pinholes were detected.

It is contemplated that the fluorocarbon polymer/additive coatings can be used in a variety of applications including those for which wear and load resistance, corrosion resistance, and/or release characteristics is desired.

For example, composite coatings of the present invention may be applied to the chemical seal and drive portion of agitators commonly employed in chemical vessels for mixing corrosive chemicals. Such composite coatings may also be applied to the tips of blades of such agitators which are subject to high abrasion and wear.

Still further, composites of the present invention may be applied as coatings to metal roll surfaces of the type found on rollers used in paper making, calendaring, and extrusion lamination, which rollers are usually subjected to abrasion, wear, and high load.

Many of the conventional primer systems used with the application of fluorinated polymer coatings to metal substrates, include chemicals, such as for example chromic oxide, which are considered detrimental to the environment and definitely are not approved for use with food stuffs for human consumption. On the other hand PFA, PPS and PVDF have been approved by the U.S. Food and Drug Administration as coating materials which can be used in the processing of food stuffs for human consumption. Such approval has likewise been given to many of the species of crystal-line ceramics. Thus, the use of the barrier coating system of the present invention and the composites formed therewith exhibit an additional advantage wherein applied to process equipment used in the preparation of such food stuffs.

## Claims

1. A method for forming on an article a coating which comprises a primer coating and a top coating and which has a thickness of at least about 1 mm (40 mils) comprising:
(a) forming a primer coating having a thickness of about 0.03 mm (1 mil) to about 0.65 mm (25 mils) by applying to the substrate one or more primer layers of coating composition comprising a homogeneous mixture of a major amount of at least one fluorocarbon resin (A) and a minor amount of property-improving additive (B) or (C);
the resin (A) being: perfluoroalkoxy tetrafluoroethylene copolymer resin (PFA); ethylenechlorotrifluoroethylene copolymer resin (E-CTFE); ethylenetetrafluoroethylene copolymer resin (E-TFE); poly-(vinylidine fluoride resin) (PVDF); tetrafluoroethylenehexafluoropropylene copolymer resin (FEP); poly(chlorotrifluoroethylene) resin (CTFE); or a mixture of two or more of these resins;
the additive being:
(B) 2 to 20% by weight of an additive poly(phenylene sulfide) (PPS) having a particle size of from 1 micron to 200 microns; or
(C) 1 to 25% by weight of an inorganic nitride or diboride, or a carbide of silicon, zirconium, tungsten or boron having a particle size of from 1 to 40 microns; and
(b) forming a top coating by applying to the primer coating one or more top coat layers of coating composition comprising a homogeneous mixture of a major amount of at least one fluorocarbon resin (A) above and a minor amount of property-improving additive (C) above.

2. A method according to claim 1 wherein the coating composition of the primer layer(s) comprises the fluorocarbon resin (A) and the additive (C).

3. A method according to claim 1 wherein the coating composition of the primer layer(s) comprises the fluorocarbon resin (A) and the poly(phenylene sulfide) (PPS) additive (B).

4. A method according to any preceding claim wherein the coating composition of the primer layer(s) comprises the fluorocarbon resin (A), the poly(phenylene sulfide) (PPS) additive (B) and the additive (C).

5. A method according to any preceding claim wherein the fluorocarbon resin (A) comprises PFA.

6. A method according to any of claims 1 to 4 wherein the fluorocarbon resin comprises E-CTFE, E-TFE, PVDF, FEP or CTFE.

7. A method according to any preceding claim wherein the additive (C) comprises silicon carbide.

8. A method according to any preceding claim wherein the top coating is formed by applying one or more top coat layers each having a thickness of about 0.025 mm (1 mil) to 0.4 mm (16 mils).

9. A method according to any preceding claim wherein the amount of additive (B) is 5 to 10% by weight and the amount of additive (C) is 2 to 20% by weight.

10. A coating composition comprising a homogeneous mixture of a major amount of at least one fluorocarbon resin (A) and a minor amount of a property-improving additive (C);
the resin (A) being: perfluoroalkoxy tetrafluoroethylene copolymer resin (PFA); ethylenechlorotrifluoroethylene copolymer resin (E-CTFE); ethylenetetrafluoroethylene copolymer resin (E-TFE); poly-(vinylidine fluoride resin) (PVDF); tetrafluoroethylenehexafluoropropylene copolymer resin (FEP); poly(chlorotrifluoroethylene) resin (CTFE); or a mixture of two or more of these resins; and
the additive (C) being 1 to 25% by weight of an inorganic nitride or diboride, or a carbide of silicon, zirconium, tungsten or boron having a particle size of from 1 to 40 microns;
the said composition being effective for use in the formation of an adherent, cohesive, non-porous, and corrosion-resistant coating having a thickness of at least 1 mm (40 mils).

11. A composition according to claim 10 further comprising a property-improving additive (B), (B) being 2 to 20% by weight of a poly(phenylene sulfide) (PPS) having a particle size of from 1 micron to 200 microns.

12. A composition according to claim 10 or 11 wherein the fluorocarbon resin consists essentially of PFA.

13. A composition according to claim 10, 11 or 12 comprising 2 to 20% by weight of additive (C).

14. A composition according to any of claims 10 to 13 wherein the additive (C) comprises silicon carbide.

15. An article having thereon an adherent, cohesive, non-porous and corrosion-resistant coating formed from the fused composition of any of claims 10 to 14.

16. An article having thereon a coating formed by the method of any of claims 1 to 9.

17. An article according to claim 16 comprising a metal substrate having thereon a primer coating formed from a fused composition comprising PFA and 2 to 20 wt. % PPS and a top coating formed from a fused composition comprising PFA and 1 to 20 wt. % of additive (C).

18. An article according to claim 17 wherein the primer coating is formed from a fused composition comprising PFA and 5 to 10% by weight of PPS and wherein the top coating is formed from a fused composition comprising PFA and 1 to 5% by weight of additive (C) .

19. An article according to claim 17 or 18 wherein the top coating comprises PFA and 1 to 3% by weight of additive (C).

20. An article according to claim 17, 18 or 19 wherein the additive comprises silicon carbide.

21. An article according to any of claims 17 to 20 wherein the primer coating is formed from a fused composition comprising silicon carbide.

22. An article according to claim 16 comprising a metal substrate having thereon a primer coating formed from a fused composition comprising E-CTFE, E-TFE or PVDF as the fluorocarbon resin (A) and 1 to 25% by weight of additive (C) and further comprising a top coating formed from a fused composition comprising E-CTFE, E-TFE or PVDF as the fluorocarbon resin (A) and less than 50% by weight of additive (C).

23. An article according to claim 20 wherein the primer coating is formed from a fused composition comprising the said fluorocarbon resin and 2 to 20 wt. % of additive (C), and the top coating formed from a fused composition comprising the said fluorocarbon resin and 1 to 5 wt. % of additive (C).

24. An article according to claim 22 wherein the top coating comprises E-CTFE, E-TFE or PVDF and 1 to 3% by weight of additive (C).

25. An article according to any of claims 22 to 24 wherein additive (C) comprises silicon carbide.

26. A moulded article formed from the fused composition of any of claims 10 to 14.

27. A sheet formed from the fused composition of any of claims 10 to 14.

28. A method of forming a fused, non-porous and corrosion-resistant coating from the composition of any of claims 10 to 14 comprising heating the composition for a predetermined time to temperature at least 14 degrees C (25 degrees F) below the temperature at which the resin of the composition in neat form can be fused completely by heating for no longer than the said predetermined period of time without substantially degrading the resin.

29. A method according to any of claims 1 to 10 comprising heating the composition for a predetermined period of time to a temperature at least 14 degrees C (25 degrees F) below the temperature at which the resin of the composition in neat form can be fused completely by heating for no longer than the predetermined period of time without substantially degrading the resin.

## Patentansprüche

1. Verfahren zur Ausbildung einer Beschichtung auf einem Artikel, welche eine Grundierbeschichtung und eine Deckbeschichtung umfasst und welche eine Dicke von mindestens etwa 1 mm (40 mil) aufweist, umfassend:
(a) Ausbilden einer Grundierbeschichtung mit einer Dicke von etwa 0,03 mm (1 mil) bis etwa 0,65 mm (25 mil) durch Aufbringen auf das Substrat einer oder mehrerer Grundierbeschichtungen einer Beschichtungszusammensetzung, umfassend eine homogene Mischung aus einer größeren Menge von mindestens einem Fluorkohlenstoffharz (A) und einer kleineren Menge eines die Eigenschaft verbessernden Additivs (B) oder (C);
wobei das Harz (A) Folgendes ist: Perfluoralkoxytetrafluorethylen-Copolymerharz (PFA); Ethylenchlortrifluorethylen-Copolymerharz (E-CTFE); Ethylentetrafluorethylen-Copolymerharz (E-TFE); Poly(vinylidenfluoridharz) (PVDF); Tetrafluorethylenhexafluorpropylen-Copolymerharz (FEP); Poly(chlortrifluorethylen)harz (CTFE); oder eine Mischung von zwei oder mehreren dieser Harze;
wobei das Additiv Folgendes ist:
(B) 2 bis 20 Gew.-% eines Additivs Poly(phenylensulfid) (PPS) mit einer Teilchengröße von 1 µm bis 200 µm; oder
(C) 1 bis 25 Gew.% eines anorganischen Nitrids oder Diborids; oder ein Carbid von Silicium, Zirkonium, Wolfram oder Bor mit einer Teilchengröße von 1 bis 40 µm; und
(b) Ausbilden einer Deckbeschichtung durch Aufbringen auf die Grundierbeschichtung einer oder mehrerer Decküberzugsschichten einer Beschichtungszusammensetzung, umfassend eine homogene Mischung einer größeren Menge von mindestens einem Fluorkohlenstoffharz (A) wie obenstehend und einer kleineren Menge an die Eigenschaft verbesserndem Additiv (C) wie obenstehend.

2. Verfahren nach Anspruch 1, wobei die Beschichtungszusammensetzung der Grundierbeschichtung(en) das Fluorkohlenstoffharz (A) und das Additiv (C) umfasst.

3. Verfahren nach Anspruch 1, wobei die Beschichtungszusammensetzung der Grundierschicht(en) das Fluorkohlenstoffharz (A) und das Poly(phenylensulfid) (PPS)-Additiv (B) umfasst.

4. Verfahren nach mindestens einem der vorausgehenden Ansprüche, wobei die Beschichtungszusammensetzung der Grundierschicht(en) das Fluorkohlenstoffharz (A), das Poly(phenylensulfid) (PPS)-Additiv (B) und das Additiv (C) umfasst.

5. Verfahren nach mindestens einem der vorausgehenden Ansprüche, wobei das Fluorkohlenstoffharz (A) PFA umfasst.

6. Verfahren nach mindestens einem der Ansprüche 1 bis 4, wobei das Fluorkohlenstoffharz E-CTFE, E-TFE, PVDF, FEP oder CTFE umfasst.

7. Verfahren nach mindestens einem der vorausgehenden Ansprüche, wobei das Additiv (C) Siliciumcarbid umfasst.

8. Verfahren nach mindestens einem der vorausgehenden Ansprüche, wobei die Deckbeschichtung durch Aufbringen einer oder mehrerer Decküberzugsschichten gebildet wird, wobei jede eine Dicke von etwa 0,025 mm (1 mil) bis 0,4 mm (16 mil) aufweist.

9. Verfahren nach mindestens einem der vorausgehenden Ansprüche, wobei die Menge des Additivs (B) 5 bis 10 Gew.-% und die Menge des Additivs (C) 2 bis 20 Gew.-% beträgt.

10. Beschichtungszusammensetzung, umfassend eine homogene Mischung aus einer größeren Menge von mindestens einem Fluorkohlenstoffharz (A) und eine kleinere Menge eines die Eigenschaft verbessernden Additivs (C);
wobei das Harz (A) Folgendes ist: Perfluoralkoxytetrafluorethylen-Copolymerharz (PFA); Ethylenchlortrifluorethylen-Copolymerharz (E-CTFE); Ethylentetrafluorethylen-Copolymerharz (E-TFE); Poly(vinylidenfluoridharz) (PVDF); Tetrafluorethylenhexafluorpropylen-Copolymerharz (FEP); Poly(chlortrifluorethylen)harz (CTFE); oder eine Mischung von zwei oder mehreren dieser Harze; und
das Additiv (C) 1 bis 25 Gew.-% eines anorganischen Nitrids oder Diborids ist, oder ein Carbid von Silicium, Zirkonium, Wolfram oder Bor mit einer Teilchengröße von 1 bis 40 µm ist;
wobei die Zusammensetzung wirksam ist zur Verwendung bei der Bildung einer haftenden, kohäsiven, nichtporösen und korrosionsbeständigen Beschichtung mit einer Dicke von mindestens 1 mm (40 mil).

11. Zusammensetzung nach Anspruch 10, weiterhin umfassend ein die Eigenschaft verbesserndes Additiv (B), wobei (B) 2 bis 20 Gew.-% eines Poly(phenylensulfids) (PPS) mit einer Teilchengröße von 1 µm bis 200 µm ist.

12. Zusammensetzung nach Anspruch 10 oder 11, wobei das Fluorkohlenstoffharz im wesentlichen aus PFA besteht.

13. Zusammensetzung nach Anspruch 10, 11 oder 12, umfassend 2 bis 20 Gew.-% von Additiv (C).

14. Zusammensetzung nach mindestens einem der Ansprüche 10 bis 13, wobei das Additiv (C) Siliciumcarbid umfasst.

15. Artikel mit einer darauf befindlichen haftenden, kohäsiven, nichtporösen und korrosionsbeständigen Beschichtung, gebildet aus der Schmelzmasse nach mindestens einem der Ansprüche 10 bis 14.

16. Artikel mit einer darauf befindlichen Beschichtung, gebildet durch das Verfahren nach mindestens einem der Ansprüche 1 bis 9.

17. Artikel nach Anspruch 16, umfassend ein Metallsubstrat mit einer Grundierbeschichtung darauf, gebildet aus einer Schmelzmasse, umfassend PFA und 2 bis 20 Gew.-% PPS, und einer Deckbeschichtung, gebildet aus einer PFA und 1 bis 20 Gew.-% Additiv (C) umfassenden Schmelzmasse.

18. Artikel nach Anspruch 17, wobei die Grundierbeschichtung aus einer PFA und 5 bis 10 Gew.-% PPS umfassenden Schmelzmasse gebildet wird und wobei die Deckbeschichtung aus einer PFA und 1 bis 5 Gew.-% Additiv (C) umfassenden Schmelzmasse gebildet wird.

19. Artikel nach Anspruch 17 oder 18, wobei die Deckbeschichtung PFA und 1 bis 3 Gew.-% Additiv (C) umfasst.

20. Artikel nach Anspruch 17, 18 oder 19, wobei das Additiv Siliciumcarbid umfasst.

21. Artikel nach mindestens einem der Ansprüche 17 bis 20, wobei die Grundierbeschichtung aus einer Silciumcarbid umfassenden Schmelzmasse gebildet wird.

22. Artikel nach Anspruch 16, umfassend ein Metallsubstrat mit einer darauf befindlichen Grundierbeschichtung, gebildet aus einer Schmelzmasse, umfassend E-CTFE, E-TFE oder PVDF als Fluorkohlenstoffharz (A) und 1 bis 25 Gew.-% Additiv (C), und weiterhin umfassend eine Deckbeschichtung, gebildet aus einer Schmelzzusammensetzung, umfassend E-CTFE, E-TFE oder PVDF als Fluorkohlenstoffharz (A) und weniger als 50 Gew.-% Additiv (C).

23. Artikel nach Anspruch 20, wobei die Grundierbeschichtung aus einer das Fluorkohlenstoffharz und 2 bis 20 Gew.-% Additiv (C) umfassenden Schmelzmasse gebildet wird und die Deckbeschichtung aus einer das Fluorkohlenstoffharz und 1 bis 5 Gew.-% Additiv (C) umfassenden Schmelzmasse gebildet wird.

24. Artikel nach Anspruch 22, wobei die Deckbeschichtung E-CTFE, E-TFE oder PVDF und 1 bis 3 Gew.-% Additiv (C) umfasst.

25. Artikel nach mindestens einem der Ansprüche 22 bis 24, wobei das Additiv (C) Siliciumcarbid umfasst.

26. Formartikel, gebildet aus der Schmelzmasse nach mindestens einem der Ansprüche 10 bis 14.

27. Tafel, gebildet aus der Schmelzmasse nach mindestens einem der Ansprüche 10 bis 14.

28. Verfahren zum Bilden einer nichtporösen und korrosionsbeständigen Schmelzbeschichtung aus der Zusammensetzung nach mindestens einem der Ansprüche 10 bis 14, umfassend das Erwärmen der Zusammensetzung für eine vorbestimmte Zeit auf eine Temperatur von mindestens 14°C (25°F) unterhalb der Temperatur, bei welcher das Harz der Zusammensetzung in reiner Form vollständig durch Erwärmen während eines Zeitraums, der nicht länger als der vorbestimmte ist, geschmolzen werden kann, ohne das Harz wesentlich zu zersetzen.

29. Verfahren nach mindestens einem der Ansprüche 1 bis 10, umfassend das Erwärmen der Zusammensetzung für eine vorbestimmte Zeit auf eine Temperatur von mindestens 14°C (25°F) unterhalb der Temperatur, bei welcher das Harz der Zusammensetzung in reiner Form vollständig durch Erwärmen während eines Zeitraums, der nicht länger als der vorbestimmte Zeitraum ist, geschmolzen werden kann, ohne das Harz wesentlich zu zersetzen.

## Revendications

1. Méthode pour former sur un article un revêtement qui comprend un enduit de fond et un enduit de finition et qui a une épaisseur d'au moins environ 1 mm (40 mils) comprenant :
(a) former un enduit de fond ayant une épaisseur d'environ 0,03 mm (1 mil) à environ 0,65 mm (25 mils) en appliquant au substrat une ou plusieurs couches de fond de la composition de revêtement comprenant un mélange homogène d'une quantité majeure d'au moins une résine fluorocarbonée (A) et une quantité mineure d'un additif (B) ou (C) améliorant les propriétés;
la résine (A) étant : une résine copolymère de perfluoro-alcoxy-tétrafluoroéthylène (PFA); une résine copolymère d'éthylène-chloro-trifluoroéthylène (E-CTFE); une résine copolymère d'éthylène-tétrafluoroéthylène (E-TFE); une résine de poly-(vinylidène fluorure) (PVDF); une résine de copolymère de tétrafluoroéthylène-hexafluoropropylène (FEP); une résine de poly-(chloro-trifluoroéthylène) (CTFE); ou un mélange de deux ou plusieurs de ces résines;
l'additif étant :
(B) 2 à 20% en poids d'un additif de poly-(phénylène sulfure) (PPS) ayant une grosseur de particules de 1 micron à 200 microns; ou
(C) 1 à 25% en poids d'un nitrure ou d'un diborure inorganique, ou d'un carbure de silicium, de zirconium, de tungstène ou de bore ayant une grosseur de particules de 1 à 40 microns; et
(b) former un enduit de finition en appliquant à l'enduit de fond une ou plusieurs couches de finition de la composition de revêtement comprenant un mélange homogène d'une quantité majeure d'au moins une résine fluorocarbonée (A) ci-dessus et une quantité mineure d'un additif (C) ci-dessus améliorant les propriétés.

2. Méthode selon la revendication 1 dans laquelle la composition de revêtement de la/des couche(s) d'enduit de fond comprend la résine fluorocarbonée (A) et l'additif(C).

3. Méthode selon la revendication 1 dans laquelle la composition de revêtement de la/des couche(s) d'enduit de fond comprend la résine fluorocarbonée (A) et l'additif (B) de poly-(phénylène sulfure) (PPS).

4. Méthode selon l'une quelconque des revendications précédentes dans laquelle la composition de revêtement de la/des couche(s) d'enduit de fond comprend la résine fluorocarbonée (A), l'additif (B) de poly-(phénylène sulfure) (PPS) et l'additif (C).

5. Méthode selon l'une quelconque des revendications précédentes dans laquelle la résine fluorocarbonée (A) comprend du PFA.

6. Méthode selon l'une quelconque des revendications 1 à 4 dans laquelle la résine fluorocarbonée comprend de l'E-CTFE, de l'E-TFE, du PVDF, du FEP ou du CTFE.

7. Méthode selon l'une quelconque des revendications précédentes dans laquelle l'additif (C) comprend du carbure de silicium.

8. Méthode selon l'une quelconque des revendications précédentes dans laquelle l'enduit de finition est formé en appliquant une ou plusieurs couches d'enduit de finition ayant chacune une épaisseur d'environ 0,025 mm (1 mil) à 0,4 mm (16 mils).

9. Méthode selon l'une quelconque des revendications précédentes dans laquelle la quantité d'additif (B) est de 5 à 10% en poids et la quantité d'additif (C) est de 2 à 20% en poids.

10. Composition de revêtement comprenant un mélange homogène d'une quantité majeure d'au moins une résine fluorocarbonée (A) et une quantité mineure d'un additif (C) améliorant les propriétés;
la résine (A) étant : une résine copolymère de perfluoro-alcoxy-tétrafluoroéthylène (PFA); une résine copolymère d'éthylène-chloro-trifluoroéthylène (E-CTFE); une résine copolymère d'éthylène-tétrafluoroéthylène (E-TFE); une résine de poly-(vinylidène fluorure) (PVDF); une résine de copolymère de tétrafluoroéthylène-hexafluoropropylène (FEP); une résine de poly-(chloro-trifluoroéthylène) (CTFE); ou un mélange de deux ou plusieurs de ces résines;
l'additif (C) étant de 1 à 25% en poids d'un nitrure ou d'un diborure inorganique, ou d'un carbure de silicium, de zirconium, de tungstène ou de bore ayant une grosseur de particules de 1 à 40 microns;
ladite composition étant efficace pour être utilisée dans la formation d'un revêtement adhérent, cohésif, non poreux, et résistant à la corrosion ayant une épaisseur d'au moins 1 mm (40 mils).

11. Composition selon la revendication 10 comprenant en outre un additif (B) améliorant les propriétés, (B) étant de 2 à 20% en poids d'un poly-(phénylène sulfure) (PPS) ayant une grosseur de particules de 1 micron à 200 microns.

12. Composition selon la revendication 10 ou 11 dans laquelle la résine fluorocarbonée consiste essentiellement en PFA.

13. Composition selon la revendication 10, 11 ou 12 comprenant de 2 à 20% en poids de l'additif (C).

14. Composition selon l'une quelconque des revendications 10 à 13 dans laquelle l'additif (C) comprend du carbure de silicium.

15. Article recouvert d'un revêtement adhérent, cohésif, non poreux et résistant à la corrosion formé de la composition fondue de l'une quelconque des revendications 10 à 14.

16. Article recouvert d'un revêtement formé par la méthode de l'une quelconque des revendications 1 à 9.

17. Article selon la revendication 16 comprenant un substrat métallique recouvert d'un enduit de fond formé d'une composition fondue comprenant du PFA et de 2 à 20% en poids de PPS et d'un enduit de finition formé d'une composition fondue comprenant du PFA et de 1 à 20% en poids de l'additif (C).

18. Article selon la revendication 17 dans lequel l'enduit de fond est formé d'une composition fondue comprenant du PFA et de 5 à 10% en poids de PPS et dans lequel l'enduit de finition est formé d'une composition fondue comprendant du PFA et de 1 à 5% en poids de l'additif (C).

19. Article selon la revendication 17 ou 18 dans lequel l'enduit de finition comprend du PFA et de 1 à 3% en poids de l'additif (C).

20. Article selon la revendication 17, 18 ou 19 dans lequel l'additif comprend du carbure de silicium.

21. Article selon l'une quelconque des revendications 17 à 20 dans lequel l'enduit de fond est formé d'une composition fondue comprenant du carbure de silicium.

22. Article selon la revendication 16 comprenant un substrat métallique recouvert d'un enduit de fond formé d'une composition fondue comprenant de l'E-CTFE, de l'E-TFE ou du PVDF en tant que la résine fluorocarbonée (A) et de 1 à 25% en poids de l'additif (C) et comprenant en outre un enduit de finition formé d'une composition fondue comprenant de l'E-CTFE, de l'E-TFE ou du PVDF en tant que la résine fluorocarbonée (A) et moins de 50% en poids de l'additif (C).

23. Article selon la revendication 20 dans lequel l'enduit de fond est formé d'une composition fondue comprenant ladite résine fluorocarbonée et de 2 à 20% en poids de l'additif (C); et l'enduit de finition est formé d'une composition fondue comprenant ladite résine fluorocarbonée et de 1 à 5% en poids de l'additif (C).

24. Article selon la revendication 22 dans lequel l'enduit de finition comprend de l'E-CTFE, de l'E-TFE ou du PVDF et de 1 à 3% en poids de l'additif (C).

25. Article selon l'une quelconque des revendications 22 à 24 dans lequel l'additif (C) comprend du carbure de silicium.

26. Article moulé formé avec 1a composition fondue de l'une quelconque des revendications 10 à 14.

27. Feuille formée avec la composition fondue de l'une quelconque des revendications 10 à 14.

28. Méthode pour former un revêtement fondu, non poreux et résistant à la corrosion avec la composition de l'une quelconque des revendications 10 à 14 comprenant chauffer la composition pendant un temps prédéterminé à une température d'au moins 14 degrés C (25 degrés F) au-dessous de la température à laquelle la résine de la composition sous forme pure peut être complètement fondue en chauffant pendant pas plus longtemps que ladite période de temps prédéterminée sans dégrader sensiblement la résine.

29. Méthode selon l'une quelconque des revendications 1 à 10 comprenant chauffer la composition pendant une période de temps prédéterminée à une température d'au moins 14 degrés C (25 degrés F) au-dessous de la température à laquelle la résine de la composition sous forme pure peut être complètement fondue en chauffant pendant pas plus longtemps que ladite période de temps prédéterminée sans dégrader sensiblement la résine.
